# EUROPEAN PATENT SPECIFICATION

(11) **EP 4 361 741 B1**
(45) Date of publication and mention of the grant of the patent: **03.12.2025**
(21) Application number: 23158580.3
(22) Date of filing: 24.02.2023
(51) Int. Cl.: G05B 19/042, G05B 9/02, F15B 13/00

(54) **SAFETY MODULE AND COUPLING BODY**
SICHERHEITSMODUL UND KUPPLUNGSGRHÄUSE
MODULE DE SÉCURITÉ ET CORPS DE COUPLAGE

(30) Priority: 27.10.2022 JP 2022172228
(43) Date of publication of application: 01.05.2024
(73) Proprietor: SMC Corporation, Tokyo 104-0031 (JP)
(72) Inventor: KOBAYASHI, Yuri, Ibaraki, 3002493 (JP)
(74) Representative: Keil & Schaafhausen Patentanwälte PartGmbB

(56) References cited:
- EP-A1- 1 396 772
- EP-A1- 3 786 502
- US-A1- 2009 045 363
- US-A1- 2017 356 475

## Description

### BACKGROUND OF THE INVENTION

### FIELD OF THE INVENTION

The present invention relates to a safety module and a module coupling body.

### DESCRIPTION OF THE RELATED ART

In US 2009/0045363 A1, a safety module is disclosed. The safety module includes a control electronic circuit. The control electronic circuit is capable of controlling a switching device, and interrupting the supply of voltage to each module.

Interruption of the supply of voltage is performed in the case that a critical condition is detected. The critical condition is detected by a control device.

EP 3 786 502 A1 discloses a control unit for electromagnetic valve units comprising a control module and an output module. The control module comprises a control circuit. The output module comprises a safety control circuit and a valve drive circuit. A drive power supply supplies power to the valve drive circuit that is configured to operate the valve units. The safety control circuit may interrupt said power supply to the valve drive circuit. The control circuit is connected to the safety control circuit and the valve drive circuit by a shared control line reaching from the control module to the output module that splits into control line and control line, respectively.

US 2009/045363 A1 discloses a safety module comprising a switching arrangement that is configured to interrupt a voltage supply line to downstream modules. The switching arrangement is controlled by control electronics that are connected to control and/or sensor lines. The control electronics control the switching arrangement to interrupt the voltage supply when critical or safety-related states have been identified by a control and/or diagnostic device.

US 2017/356475 A1 discloses a control module linked to a valve island base module. The control module comprises a superordinate control unit. The valve island base module comprises a module control unit with switching means that control the supply of energy to coils of electromagnetic control valves. The superordinate control unit and the module control unit are supplied with electric current by a shared power supply line. Further, the superordinate control unit and the module control unit are coupled via a bus line.

### SUMMARY OF THE INVENTION

According to the disclosure of US 2009/0045363 A1, in the case that the critical condition is detected, the control device carries out a safety control communication via an internal bus line of the safety module. Stated otherwise, the control device issues an instruction to the control electronic circuit of the safety module to interrupt the supply of voltage. Furthermore, the internal bus line carries out an operation control communication in relation to an operation control of a valve module. The safety control communication and the operation control communication are performed using the same internal bus line. Accordingly, the safety control communication is restricted by the operation control communication.

The present invention has the object of solving the aforementioned problem.

This object is solved by the safety module according to claim 1 and the module coupling body according to claim 8.

Preferred embodiments of the invention are evident from the dependent claims.

According to the present invention, in the safety module, an adverse influence of the operation control communication on the safety control communication can be suppressed.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a diagram illustrating a valve system including a safety module according to an embodiment of the present invention and a plurality of valve modules;
FIG. 2 is a diagram illustrating a manner in which electrical power used for performing operations is supplied to the valve modules;
FIG. 3 is a block diagram schematically showing configurations of a first safety control processing circuit and a second safety control processing circuit;
FIG. 4 is a diagram illustrating a valve system including a module coupling body in which an additional module is arranged between a communication module and the safety module;
FIG. 5 is a diagram illustrating a valve system including a safety module and a plurality of valve modules according to a second exemplary modification (Exemplary Modification 2);
FIG. 6 is a diagram illustrating a valve system including a safety module and a plurality of valve modules according to a third exemplary modification (Exemplary Modification 3);
FIG. 7 is a diagram for describing an example of a fourth exemplary modification (Exemplary Modification 4) in which the valve system includes the safety module according to the Exemplary Modification 2;
FIG. 8 is a diagram for describing another example of the Exemplary Modification 4 in which the valve system includes the safety module according to the Exemplary Modification 3;
FIG. 9A is a diagram illustrating a connector that three types of safety modules each have and that is common to the three types;
FIG. 9B is a diagram illustrating a connector of the communication module; and
FIG. 9C is a diagram illustrating a connector of the additional module.

### DETAILED DESCRIPTION OF THE INVENTION

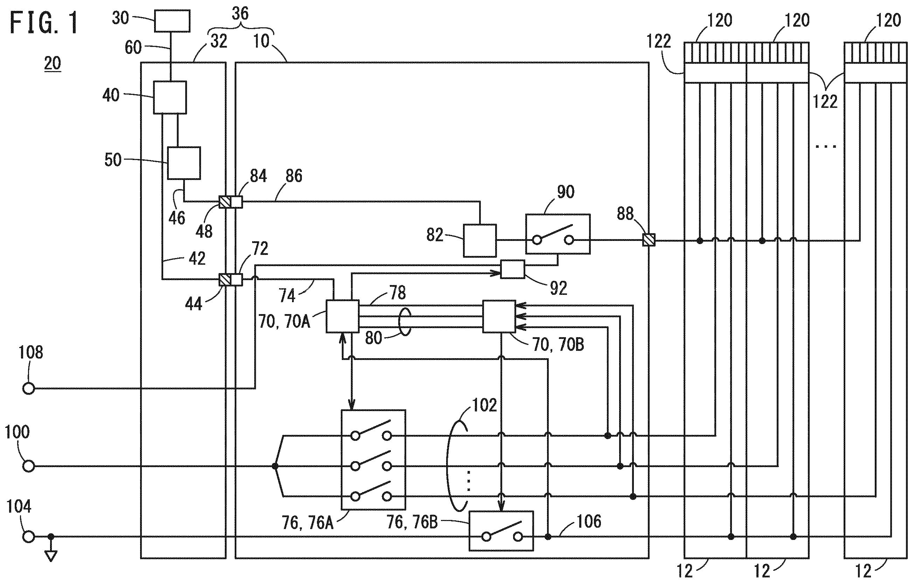

FIG. 1 is a diagram illustrating a valve system 20 including a safety module 10 according to one embodiment of the present invention and a plurality of valve modules 12. The valve system 20 shown in FIG. 1 further includes a control device 30 that controls the plurality of valve modules 12, and a communication module 32 that relays communications in relation to the control of the valve modules 12. Each of the safety module 10, the control device 30, the communication module 32, and the valve modules 12 are separated from each other. The communication module 32 is disposed between the control device 30 and the safety module 10. The safety module 10 and the communication module 32 are mutually connected together, and thereby constitute a module coupling body 36.

The control device 30, for example, is a PLC (Programmable Logic Controller). The control device 30 performs communications in relation to control of the plurality of valve modules 12. The communications in relation to controlling each of the valve modules 12 include safety control communication in relation to a safety control of each of the valve modules 12, and operation control communication in relation to an operation control that differs from the safety control of each of the valve modules 12.

The operation control of the valve modules 12 corresponds, for example, to controlling a supply of fluid by operating the valve modules 12. The safety control of the valve modules 12 corresponds, for example, to a control to interrupt the electrical power used for performing operations (electrical power for operation) supplied to the valve modules 12 during operation of the valve modules 12, and a control to interrupt the operation control of the valve modules 12 and to safely cause the valve modules 12 to stop.

The communication module 32 includes a control communication processing circuit 40, a first wiring 42, a first terminal 44, a second wiring 46, a second terminal 48, and an internal communication processing circuit 50. The control communication processing circuit 40 relays the safety control communication and the operation control communication between the control device 30 and the safety module 10.

The first wiring 42 is used for the safety control communication that is relayed by the control communication processing circuit 40. The first wiring 42 connects the control communication processing circuit 40 and the first terminal 44. The second wiring 46 is used for the operation control communication that is relayed by the control communication processing circuit 40. The second wiring 46 connects the control communication processing circuit 40 and the second terminal 48. The internal communication processing circuit 50 is disposed on the second wiring 46.

The safety control communication and the operation control communication between the control communication processing circuit 40 and the control device 30 are both performed using a control communication line 60. It is assumed that a safety control signal for the safety control is input from the control device 30 to the control communication processing circuit 40 by way of the safety control communication in which the control communication line 60 is used. In that case, the control communication processing circuit 40 outputs the safety control signal to the first terminal 44 via the first wiring 42.

It is assumed that an operation control signal for the operation control is input from the control device 30 to the control communication processing circuit 40 by way of the operation control communication in which the control communication line 60 is used. In that case, the control communication processing circuit 40 outputs the operation control signal to the second terminal 48 via the second wiring 46 and the internal communication processing circuit 50.

It is assumed that the safety control signal for the safety control is input from the safety module 10 to the control communication processing circuit 40 via the first terminal 44 and the first wiring 42. In that case, the control communication processing circuit 40 outputs the safety control signal to the control device 30 via the control communication line 60. It is assumed that the operation control signal for the operation control is input from the safety module 10 to the control communication processing circuit 40 via the second terminal 48, the second wiring 46, and the internal communication processing circuit 50. In that case, the control communication processing circuit 40 outputs the operation control signal to the control device 30 via the control communication line 60.

The internal communication processing circuit 50 performs the operation control communication with the safety module 10, for example, using a communication protocol CAN FD (Controller Area Network with Flexible Data Rate). The internal communication processing circuit 50 performs a termination process of the connection in accordance with the communication protocol CAN FD. A processing function to terminate the connection in accordance with the communication protocol CAN FD may be provided inside the control communication processing circuit 40. In that case, the internal communication processing circuit 50 is unnecessary.

Moreover, it should be noted that the operation control communication between the internal communication processing circuit 50 and the safety module 10 may use another type of communication protocol rather than CAN FD. For example, communication protocols such as CAN (Controller Area Network), Ethernet (registered trademark), SPI (Serial Peripheral Interface), RS-485, USB (Universal Serial Bus) or the like may be used.

The safety module 10 includes a safety control processing circuit 70, a connection terminal 72, a safety control wiring 74, a first switching circuit 76, a bidirectional communication line 78, a pair of unidirectional communication lines 80, an operation control processing circuit 82, an input terminal 84, an operation control wiring 86, an output terminal 88, a signal output circuit 90, and a voltage conversion circuit 92. Since the safety module 10 is a replaceable module, in the case that the safety module 10 has malfunctioned, it is not necessary to replace the entire module coupling body 36. Only the safety module 10 that has malfunctioned needs to be replaced.

The safety control processing circuit 70 carries out the safety control communication with the control device 30 via the control communication processing circuit 40 of the communication module 32. The connection terminal 72 is used in carrying out the safety control communication. The connection terminal 72 is connected to the first terminal 44 of the communication module 32. The safety control wiring 74 connects the safety control processing circuit 70 and the connection terminal 72, and is used in carrying out the safety control communication. More specifically, the safety control processing circuit 70 carries out the safety control communication with the control device 30 via the connection terminal 72 and the safety control wiring 74. On the basis of the safety control communication, the safety control processing circuit 70 outputs the safety control signal for the safety control to the first switching circuit 76 and the voltage conversion circuit 92.

The safety control processing circuit 70 includes a first safety control processing circuit 70A and a second safety control processing circuit 70B. Between the first safety control processing circuit 70A and the second safety control processing circuit 70B, the bidirectional communication line 78 and the pair of unidirectional communication lines 80 are provided in order to enable communications between the first safety control processing circuit 70A and the second safety control processing circuit 70B. The first safety control processing circuit 70A carries out the safety control communication with the control device 30 via the connection terminal 72 and the safety control wiring 74. The second safety control processing circuit 70B carries out the safety control communication with the control device 30 via the first safety control processing circuit 70A and the pair of unidirectional communication lines 80. Moreover, of the first safety control processing circuit 70A and the second safety control processing circuit 70B, the safety control wiring 74 is connected to the first safety control processing circuit 70A.

The first switching circuit 76 switches between a state of supplying the electrical power used for performing operations to each of the valve modules 12 and a state of not supplying the electrical power thereto, in accordance with the safety control signal that is output from the safety control processing circuit 70. The first switching circuit 76 includes a high side switch 76A and a low side switch 76B.

In the example shown in FIG. 1, the high side switch 76A is provided in each of the valve modules 12. Accordingly, it is possible to supply the electrical power used for performing operations and to stop the supply of the electrical power used for performing operations only to specified ones of the valve modules 12. Moreover, in the case that the plurality of the valve modules 12 are divided into a plurality of groups and the operation thereof is controlled, the high side switch 76A may be provided in each of the groups. One low side switch 76B is provided with respect to all of the valve modules 12.

The high side switch 76A is placed on an electrical power line 102 connected to a positive electrode 100 of an electrical power source of the electrical power used for performing operations that is supplied to each of the valve modules 12. The low side switch 76B is placed on an electrical power line 106 connected to a negative electrode 104 of the electrical power source of the electrical power used for performing operations that is supplied to each of the valve modules 12. Stated otherwise, the high side switch 76A is connected to the electrical power source for the valve modules 12, and the low side switch 76B is connected to ground.

On the basis of the safety control communication, the first safety control processing circuit 70A outputs the safety control signal for the safety control to the high side switch 76A. By outputting the safety control signal, the first safety control processing circuit 70A turns ON or turns OFF the high side switch 76A. FIG. 1 shows an example in which the high side switch 76A is turned OFF. By measuring the electric potential of the electrical power line 102, the second safety control processing circuit 70B detects whether the high side switch 76A is in a connected state of being turned ON or turned OFF.

The first safety control processing circuit 70A notifies the second safety control processing circuit 70B of the content of the safety control signal that has been output to the high side switch 76A, via the bidirectional communication line 78. Based on a comparison of the content of the safety control signal that has been output from the first safety control processing circuit 70A to the high side switch 76A with the detection result detected by the second safety control processing circuit 70B, the second safety control processing circuit 70B diagnoses the condition of the high side switch 76A.

On the basis of the safety control communication, the second safety control processing circuit 70B outputs the safety control signal for the safety control to the low side switch 76B. By outputting the safety control signal, the second safety control processing circuit 70B turns ON or turns OFF the low side switch 76B. FIG. 1 shows an example in which the low side switch 76B is turned OFF. By measuring the electric potential of the electrical power line 106, the first safety control processing circuit 70A detects whether the low side switch 76B is in a connected state of being turned ON or turned OFF.

The second safety control processing circuit 70B notifies the first safety control processing circuit 70A of the content of the safety control signal that has been output to the low side switch 76B, via the bidirectional communication line 78. Based on a comparison of the content of the safety control signal that has been output from the second safety control processing circuit 70B to the low side switch 76B with the detection result detected by the first safety control processing circuit 70A, the first safety control processing circuit 70A diagnoses the condition of the low side switch 76B.

As noted previously, in the diagnosis of the condition of the high side switch 76A, the second safety control processing circuit 70B compares the content of the safety control signal that has been output from the first safety control processing circuit 70A to the high side switch 76A with the detection result detected by the second safety control processing circuit 70B. When the content of the safety control signal and the detection result do not coincide, the second safety control processing circuit 70B detects that the condition of the high side switch 76A is abnormal.

In that case, the second safety control processing circuit 70B turns the low side switch 76B OFF. The supply of electrical power used for performing operations to each of the valve modules 12 is interrupted. The operations of the valve modules 12 are safely stopped. The second safety control processing circuit 70B issues a notification to the first safety control processing circuit 70A via the bidirectional communication line 78, to the effect that the low side switch 76B has been turned OFF. The first safety control processing circuit 70A issues the notification to the control device 30 to the effect that the low side switch 76B has been turned OFF, by way of the safety control communication described above.

As noted previously, in the diagnosis of the condition of the low side switch 76B, the first safety control processing circuit 70A compares the content of the safety control signal that has been output from the second safety control processing circuit 70B to the low side switch 76B with the detection result detected by the first safety control processing circuit 70A. When the content of the safety control signal and the detection result do not coincide, the first safety control processing circuit 70A detects that the condition of the low side switch 76B is abnormal.

In that case, the first safety control processing circuit 70A turns each high side switch 76A OFF. The supply of electrical power used for performing operations to each of the valve modules 12 is interrupted. The operations of the valve modules 12 are safely stopped. The first safety control processing circuit 70A issues a notification to the second safety control processing circuit 70B via the bidirectional communication line 78, to the effect that the high side switch 76A has been turned OFF. The second safety control processing circuit 70B issues the notification to the control device 30 to the effect that the high side switch 76A has been turned OFF, by way of the safety control communication described above.

The first safety control processing circuit 70A controls the state of the high side switch 76A, and monitors the condition of the low side switch 76B. The second safety control processing circuit 70B controls the state of the low side switch 76B, and monitors the condition of the high side switch 76A. The combination of the first safety control processing circuit 70A and the high side switch 76A is defined as a first combination. The combination of the second safety control processing circuit 70B and the low side switch 76B is defined as a second combination. In the case that one of the first combination and the second combination is in an abnormal condition, due to the fact that the other combination operates normally, the safety control of the valve modules 12 can be carried out more appropriately.

The operation control processing circuit 82 carries out the operation control communication with the control device 30 via the control communication processing circuit 40 and the internal communication processing circuit 50 of the communication module 32. The input terminal 84 is used in carrying out the operation control communication. The input terminal 84 is connected to the second terminal 48 of the communication module 32. The operation control wiring 86 connects the operation control processing circuit 82 and the input terminal 84, and is used in carrying out the operation control communication. On the basis of the operation control communication, the operation control processing circuit 82 outputs the operation control signal for the valve modules 12, to the valve modules 12.

The communication protocol CAN FD described above is used in the operation control communication on the operation control wiring 86. The operation control processing circuit 82 carries out the termination process of the connection in accordance with the communication protocol CAN FD between the internal communication processing circuit 50 of the communication module 32 and the operation control processing circuit 82. Moreover, it should be noted that, as the communication protocol between the internal communication processing circuit 50 and the operation control processing circuit 82, another type of communication protocol rather than CAN FD may be used.

The safety control processing circuit 70 and the operation control processing circuit 82 are separately provided in the safety module 10. Thus, in the case that the addition of a function in relation to the operation control of the valve modules 12 is carried out, it is sufficient to update only the function of the operation control processing circuit 82. If the safety control and the operation control for the valve modules 12 are performed in the same processing circuit, cases may occur in which a malfunction in the safety control may arise due to the addition of the function for the operation control. However, such a malfunction does not occur in the present embodiment. When the addition of the function in relation to the operation control is performed, there is no need to reconfirm whether or not the safety control processing circuit 70 satisfies the security standard.

The safety control wiring 74 and the operation control wiring 86 are separately provided in the safety module 10. In the safety module 10, an adverse influence of the operation control communication on the safety control communication can be suppressed.

In the case that the signal output circuit 90 has been turned ON, the output terminal 88 becomes capable of outputting the operation control signal that is output from the operation control processing circuit 82, to the valve modules 12. The signal output circuit 90, for example, is a photocoupler, and is connected to an electrical power source 108 for the electrical power used in the controls (electrical power for control), via the voltage conversion circuit 92. On the basis of the safety control communication, the first safety control processing circuit 70A outputs the safety control signal for the safety control to the voltage conversion circuit 92 in addition to the high side switch 76A.

In the case that the safety control signal that is output from the first safety control processing circuit 70A to the voltage conversion circuit 92 is an ON signal, the voltage conversion circuit 92 is turned ON. In that case, the voltage conversion circuit 92 converts the voltage of the electrical power supplied from the electrical power source 108 of the electrical power for the controls, and then supplies the electrical power whose voltage has been converted, to the signal output circuit 90. In the case that the safety control signal that is output from the first safety control processing circuit 70A to the voltage conversion circuit 92 is an OFF signal, the voltage conversion circuit 92 is turned OFF. In that case, the voltage conversion circuit 92 interrupts the supply of electrical power from the electrical power source 108 of the electrical power used in the controls, to the signal output circuit 90.

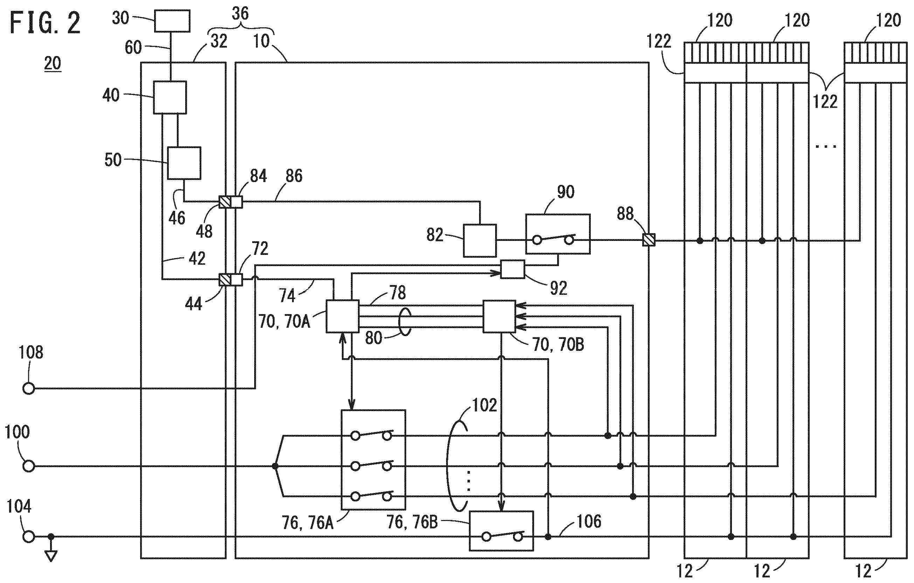

The signal output circuit 90 switches between a state of outputting the operation control signal to the valve modules 12 via the output terminal 88 and a state of not outputting the operation control signal, in accordance with the safety control signal. In the case that the safety control signal is the ON signal, the voltage conversion circuit 92 is turned ON, and since electrical power is supplied to the signal output circuit 90, the signal output circuit 90 outputs the operation control signal to the valve modules 12 (refer to FIG. 2). In the case that the safety control signal is the OFF signal, the voltage conversion circuit 92 is turned OFF, and since the supply of electrical power to the signal output circuit 90 is interrupted, the signal output circuit 90 does not output the operation control signal to the valve modules 12 (refer to FIG. 1). In the case that the operation control signal is not output to the valve modules 12, the operations of the valve modules 12 are safely stopped.

The signal output circuit 90 outputs the operation control signal from the operation control processing circuit 82 to the valve modules 12, only in the case that the safety control signal is the ON signal. In the case that the safety control signal is the OFF signal, in addition to interrupting of the supply of the operating power to the valve modules 12, it is possible to safely stop the valve modules 12, and thus the safety of the valve system 20 is increased.

The valve modules 12 include a plurality of valves 120, and drivers 122 that respectively cause the plurality of valves 120 to open and close. The valves 120, for example, are solenoid valves. Each of the drivers 122 is connected to the positive electrode 100 and the negative electrode 104 of the electrical power source of the electrical power used for performing operations supplied to the valve modules 12. The driver 122 is connected to the positive electrode 100 of the electrical power source of the electrical power used for performing operations, via the high side switch 76A that is placed on the electrical power line 102. The driver 122 is connected to the negative electrode 104 of the electrical power source of the electrical power used for performing operations, via the low side switch 76B that is placed on the electrical power line 106.

The drivers 122 open and close the valves 120 in accordance with the operation control signal that is output from the operation control processing circuit 82 of the safety module 10 to the valve modules 12. The driver 122 causes the valve 120 to be opened and closed using the electrical power source of the electrical power used for performing operations. When the driver 122 opens the valve 120, the valve 120 supplies a fluid to a supply target device to which the fluid is supplied. When the driver 122 closes the valve 120, the fluid that is supplied by the valve 120 to the supply target device is interrupted.

FIG. 2 is a diagram illustrating a manner in which the electrical power used for performing operations is supplied to the valve modules 12. As noted previously, the first safety control processing circuit 70A turns ON or turns OFF the high side switch 76A. In the case that the safety control signal output by the first safety control processing circuit 70A is the ON signal, the high side switch 76A is turned ON (refer to FIG. 2). In the case that the safety control signal output by the first safety control processing circuit 70A is the OFF signal, the high side switch 76A is turned OFF (refer to FIG. 1).

As noted previously, the second safety control processing circuit 70B turns ON or turns OFF the low side switch 76B. In the case that the safety control signal output by the second safety control processing circuit 70B is the ON signal, the low side switch 76B is turned ON (refer to FIG. 2). In the case that the safety control signal output by the second safety control processing circuit 70B is the OFF signal, the low side switch 76B is turned OFF (refer to FIG. 1).

In the case that the safety control signal is the ON signal, due to both of the high side switch 76A and the low side switch 76B being turned ON, the electrical power used for performing operations is supplied to the valve modules 12 (refer to FIG. 2). In the case that the safety control signal is the OFF signal, due to at least one of the high side switch 76A or the low side switch 76B being turned OFF, the supply of the electrical power used for performing operations to the valve modules 12 is shut off (refer to FIG. 1). Thus, a safe supply of electrical power used for performing operations to the valve modules 12 is realized.

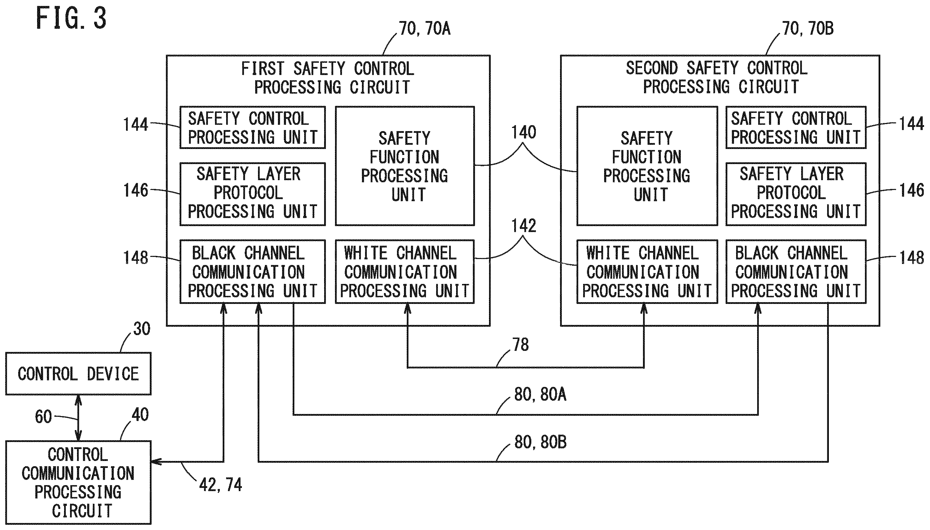

FIG. 3 is a block diagram schematically showing configurations of the first safety control processing circuit 70A and the second safety control processing circuit 70B. The first safety control processing circuit 70A and the second safety control processing circuit 70B serve as the safety control processing circuit 70 of the safety module 10. The safety control processing circuit 70 includes a processor such as a CPU (central processing unit), a GPU (graphics processing unit) or the like. The safety control processing circuit 70 includes a safety function processing unit 140, a white channel communication processing unit 142, a safety control processing unit 144, a safety layer protocol processing unit 146, and a black channel communication processing unit 148.

By the safety control processing circuit 70 executing a program stored in a non-illustrated storage unit, the safety function processing unit 140, the white channel communication processing unit 142, the safety control processing unit 144, the safety layer protocol processing unit 146, and the black channel communication processing unit 148 are realized. At least a portion of the safety function processing unit 140, the white channel communication processing unit 142, the safety control processing unit 144, the safety layer protocol processing unit 146, and the black channel communication processing unit 148 may be implemented by an integrated circuit such as an ASIC, an FPGA, or the like, or alternatively, may be implemented by an electronic circuit including a discrete device.

By the safety function processing unit 140 of the first safety control processing circuit 70A outputting the safety control signal to the high side switch 76A via a non-illustrated control signal line, the high side switch 76A is turned ON or turned OFF. The safety function processing unit 140 of the first safety control processing circuit 70A notifies the safety function processing unit 140 of the second safety control processing circuit 70B of the content of the safety control signal that has been output to the high side switch 76A. The content of the safety control signal is notified via the white channel communication processing unit 142 and the bidirectional communication line 78.

Based on a comparison of the content of the safety control signal that has been output from the first safety control processing circuit 70A with the detection result detected by the second safety control processing circuit 70B, the safety function processing unit 140 of the second safety control processing circuit 70B diagnoses the condition of the high side switch 76A. In the case that the safety function processing unit 140 of the second safety control processing circuit 70B has detected an abnormality in the high side switch 76A, by the safety function processing unit 140 of the second safety control processing circuit 70B outputting a safety control signal to the low side switch 76B via a non-illustrated control signal line, the low side switch 76B is turned OFF. The safety function processing unit 140 of the second safety control processing circuit 70B issues a notification to the safety function processing unit 140 of the first safety control processing circuit 70A, to the effect that the low side switch 76B has been turned OFF. Such a notification is carried out via the white channel communication processing unit 142 and the bidirectional communication line 78.

By the safety function processing unit 140 of the second safety control processing circuit 70B outputting a safety control signal to the low side switch 76B via a non-illustrated control signal line, the low side switch 76B is turned ON or turned OFF. The safety function processing unit 140 of the second safety control processing circuit 70B notifies the safety function processing unit 140 of the first safety control processing circuit 70A of the content of the safety control signal that has been output to the low side switch 76B. The content of the safety control signal is notified via the white channel communication processing unit 142 and the bidirectional communication line 78.

Based on a comparison of the content of the safety control signal that is output from the second safety control processing circuit 70B with the detection result detected by the first safety control processing circuit 70A, the safety function processing unit 140 of the first safety control processing circuit 70A diagnoses the condition of the low side switch 76B. In the case that the safety function processing unit 140 of the first safety control processing circuit 70A has detected an abnormality in the low side switch 76B, by the safety function processing unit 140 of the first safety control processing circuit 70A outputting a safety control signal to the high side switch 76A via a non-illustrated control signal line, the high side switch 76A is turned OFF. The safety function processing unit 140 of the first safety control processing circuit 70A issues a notification to the safety function processing unit 140 of the second safety control processing circuit 70B, to the effect that the high side switch 76A has been turned OFF. Such a notification is carried out via the white channel communication processing unit 142 and the bidirectional communication line 78.

The white channel communication processing unit 142 processes the communications between the safety function processing unit 140 of the first safety control processing circuit 70A and the safety function processing unit 140 of the second safety control processing circuit 70B. The communications between the safety function processing unit 140 of the first safety control processing circuit 70A and the safety function processing unit 140 of the second safety control processing circuit 70B are communications concerned with safety functions. Therefore, a dedicated communication protocol that satisfies a predetermined security standard is applied to such communications carried out via the bidirectional communication line 78. The communications of this type are referred to as white channel communications.

The safety control processing unit 144 of the first safety control processing circuit 70A carries out the safety control communication with the control device 30. On the basis of the safety control communication, the safety control processing unit 144 of the first safety control processing circuit 70A notifies the safety function processing unit 140 of the content of the instruction in relation to the safety control from the control device 30. In the case that the notified content is to instruct the outputting of the safety control signal to the high side switch 76A, the safety function processing unit 140 outputs the safety control signal to the high side switch 76A in the manner described above. In accordance with the safety control signal that has been output, the high side switch 76A is turned ON or turned OFF.

The pair of unidirectional communication lines 80 are disposed between the first safety control processing circuit 70A and the second safety control processing circuit 70B. The pair of unidirectional communication lines 80 include a unidirectional communication line 80A that allows communications in a direction from the first safety control processing circuit 70A to the second safety control processing circuit 70B, and a unidirectional communication line 80B that allows communications in the opposite direction.

The safety control processing unit 144 of the first safety control processing circuit 70A transfers the safety control signal from the control device 30 to the safety control processing unit 144 of the second safety control processing circuit 70B via the unidirectional communication line 80A. The safety control processing unit 144 of the first safety control processing circuit 70A acquires the safety control signal from the safety control processing unit 144 of the second safety control processing circuit 70B via the unidirectional communication line 80B. The safety control processing unit 144 of the first safety control processing circuit 70A transfers the safety control signal that has been acquired from the safety control processing unit 144 of the second safety control processing circuit 70B, to the control device 30. Thus, the safety control processing unit 144 of the second safety control processing circuit 70B carries out the safety control communication with the control device 30 via the first safety control processing circuit 70A.

It is necessary for the communications between the safety control processing unit 144 of the first safety control processing circuit 70A and the safety control processing unit 144 of the second safety control processing circuit 70B to satisfy a predetermined security standard. In order to satisfy such a security standard, the safety layer protocol processing unit 146 performs a safety layer protocol process in relation to the safety of the communications in the pair of unidirectional communication lines 80.

By performing the safety layer protocol process, a general-purpose communication protocol can be applied to the communications carried out via the unidirectional communication line 80A and the unidirectional communication line 80B. The black channel communication processing unit 148 processes the communications by way of such a general-purpose communication protocol that takes as a premise the safety layer protocol process. The communications of this type are referred to as black channel communications. The general-purpose communication protocol, for example, is a CAN FD, CAN, SPI, or UART (Universal Asynchronous Receiver/Transmitter) communication protocol or the like.

The safety control communication between the safety control processing unit 144 of the first safety control processing circuit 70A and the control device 30 is carried out via the control communication line 60, the control communication processing circuit 40 and the first wiring 42 of the communication module 32, and the safety control wiring 74 of the safety module 10. The control communication processing circuit 40 includes a safety layer protocol processing function and a black channel communication processing function.

The safety layer protocol process in relation to the safety of the communications in the first wiring 42 and the safety control wiring 74 is performed by the control communication processing circuit 40 and the safety control processing unit 144 of the first safety control processing circuit 70A. It is possible to apply the black channel communication to the safety control communications between the control communication processing circuit 40 and the safety control processing unit 144 of the first safety control processing circuit 70A via the first wiring 42 and the safety control wiring 74.

Two types of communication lines are used in the communications between the safety control processing unit 144 of the first safety control processing circuit 70A and the safety control processing unit 144 of the second safety control processing circuit 70B. The two types of communication lines are the bidirectional communication line 78 and the pair of unidirectional communication lines 80. The operation control communication in which the unidirectional communication lines 80 are used, and mutual monitoring of the conditions of the high side switch 76A and the low side switch 76B in which the bidirectional communication line 78 is used do not interfere with each other. Since a general-purpose communication protocol can be applied to the black channel communications via the unidirectional communication lines 80, the degree of freedom in relation to designing the communication method is high.

In the safety module 10 according to the present embodiment, on the basis of the safety control communication with the control device 30, the safety control processing circuit 70 outputs the safety control signal to the first switching circuit 76 and the voltage conversion circuit 92. The first switching circuit 76 includes the high side switch 76A and the low side switch 76B. In the case that the safety control signal, which is input to either one of the high side switch 76A and the low side switch 76B, is the OFF signal, that switch is turned OFF. In that case, the supply of electrical power used for performing operations to each of the valve modules 12 is interrupted. In that case, the operations of the valve modules 12 are safely stopped.

On the basis of the operation control communication with the control device 30, the operation control processing circuit 82 outputs the operation control signal to the valve modules 12 via the signal output circuit 90. In the case that the safety control signal input to the voltage conversion circuit 92 is the OFF signal, since the supply of electrical power to the signal output circuit 90 is interrupted, the signal output circuit 90 is turned OFF. Since the signal output circuit 90 is turned OFF, the operation control signal is not output to the valve modules 12. In that case, the operations of the valve modules 12 are safely stopped.

The first safety control processing circuit 70A controls the state of the high side switch 76A, and monitors the condition of the low side switch 76B. The first safety control processing circuit 70A notifies the second safety control processing circuit 70B of the control content in relation to the connected state of the high side switch 76A. The second safety control processing circuit 70B controls the state of the low side switch 76B, and monitors the condition of the high side switch 76A. The second safety control processing circuit 70B notifies the first safety control processing circuit 70A of the control content in relation to the connected state of the low side switch 76B.

In the case it is detected that the condition of the high side switch 76A is abnormal, the second safety control processing circuit 70B turns the low side switch 76B OFF. In the case it is detected that the condition of the low side switch 76B is abnormal, the first safety control processing circuit 70A turns the high side switch 76A OFF. In both of these cases, the valve modules 12 are safely stopped.

### [Exemplary Modifications]

The above-described embodiment may be modified in the following manner.

### (Exemplary Modification 1)

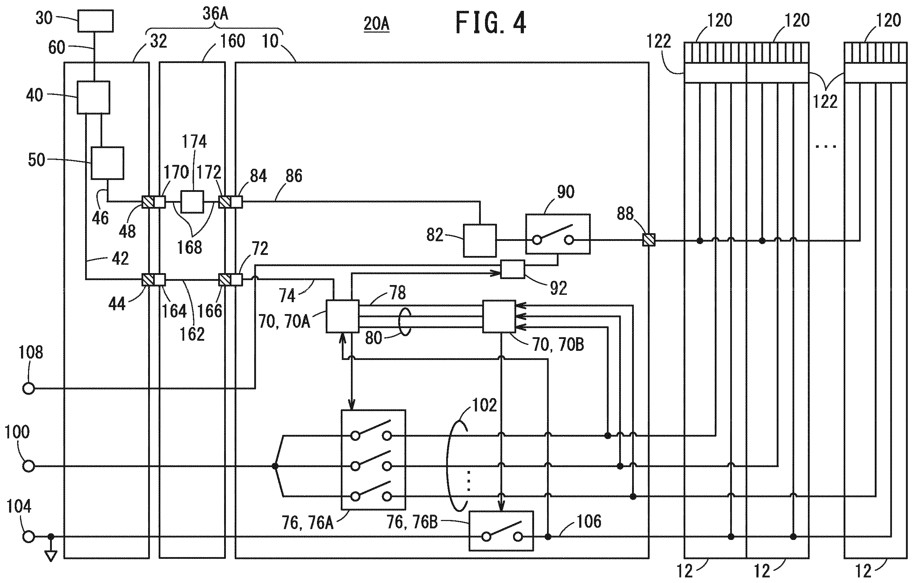

The module coupling body 36 may further include at least one additional module, in addition to the safety module 10 and the communication module 32. FIG. 4 is a diagram illustrating a valve system 20A including a module coupling body 36A in which an additional module 160 is arranged between the communication module 32 and the safety module 10. FIG. 4 shows an example in which one additional module 160 is arranged between the communication module 32 and the safety module 10.

The configuration of the valve system 20A apart from the additional module 160 shown in FIG. 4 is the same as that shown in FIG. 1, and the same reference numerals as in FIG. 1 are used. In FIG. 4, descriptions concerning constituent members denoted by the same reference numerals as those shown in FIG. 1 overlap with those features shown in FIG. 1, and therefore descriptions of such features are omitted herein. The safety module 10 and the additional module 160 are mutually connected together. The additional module 160 and the communication module 32 are mutually connected together. The safety module 10, the additional module 160, and the communication module 32, which are mutually connected together constitute the module coupling body 36A.

The additional module 160 includes a third wiring 162, a third terminal 164, a fourth terminal 166, a fourth wiring 168, a fifth terminal 170, a sixth terminal 172, and a function control processing circuit 174. The third wiring 162 is used in carrying out the safety control communication. The third terminal 164 is connected to one end of the third wiring 162. The fourth terminal 166 is connected to the other end of the third wiring 162.

The third terminal 164 is closer to the communication module 32 than the fourth terminal 166. In the example shown in FIG. 4, the third terminal 164 is connected to the first terminal 44 of the communication module 32. The fourth terminal 166 is closer to the safety module 10 than the third terminal 164. In the example shown in FIG. 4, the fourth terminal 166 is connected to the connection terminal 72 of the safety module 10.

The fourth wiring 168 is used in carrying out the operation control communication. A communication protocol such as a CAN FD, CAN, Ethernet, SPI, RS-485, USB communication protocol or the like is used for the operation control communication on the fourth wiring 168. The fifth terminal 170 is connected to one end of the fourth wiring 168. The sixth terminal 172 is connected to the other end of the fourth wiring 168.

The fifth terminal 170 is closer to the communication module 32 than the sixth terminal 172. In the example shown in FIG. 4, the fifth terminal 170 is connected to the second terminal 48 of the communication module 32. The sixth terminal 172 is closer to the safety module 10 than the fifth terminal 170. In the example shown in FIG. 4, the sixth terminal 172 is connected to the input terminal 84 of the safety module 10.

The additional module 160 is communicably connected to various processing devices that carry out various functions. The processing devices connected to the additional module 160, for example, may be an external actuator (not shown) or an external sensor (not shown). The external actuator, for example, is another valve, a warning light, etc. The function control processing circuit 174 processes the operation control signal in order for the control device 30 to control the operation of the external actuator. The function control processing circuit 174 processes condition notification signals in order to notify the control device 30 of a condition detected by the external sensor. The function control processing circuit 174 relays the operation control signal or the condition notification signals using the operation control communication.

In the present exemplary modification, the processing device connected to the additional module 160 is the external sensor. The external sensor functions to sense conditions in relation to a fluid that is supplied by the valve modules 12 to the supply target device. The function control processing circuit 174 is placed on the fourth wiring 168. The function control processing circuit 174 outputs the condition notification signals in order to notify the control device 30 of the conditions in relation to the fluid that the valve modules 12 supply to the supply target device using the operation control communication. The control device 30 that has acquired the condition notification signals may carry out the operation control or the safety control of the valve modules 12 as necessary.

The conditions in relation to the fluid are represented, for example, by a pressure, a flow rate, and a temperature of the fluid that is supplied from the valve modules 12 to the supply target device. Data concerning the fluid pressure, the flow rate, and the temperature are obtained by the function control processing circuit 174 from the external sensor that is attached to the valve modules 12 via a non-illustrated data communication line. In the case that the supply target device includes a cylinder, the data corresponding to the conditions in relation to the fluid may be data obtained from various types of external sensors that are attached to the cylinder.

The data corresponding to the conditions in relation to the fluid are preferably obtained from many types of external sensors. In order to obtain data from many types of external sensors, a larger number of the additional modules 160, which are arranged between the communication module 32 and the safety module 10, may be provided. On the basis of the data obtained from various types of external sensors, the function control processing circuit 174, which is included in each of the plurality of additional modules 160, is capable of notifying the control device 30 of the condition notification signals.

Connection destinations of the third terminal 164, the fourth terminal 166, the fifth terminal 170, and the sixth terminal 172 will be described for a case in which the plurality of additional modules 160 are arranged between the communication module 32 and the safety module 10. Of the plurality of additional modules 160, the third terminal 164 and the fifth terminal 170 of one additional module 160 are connected respectively to the fourth terminal 166 and the sixth terminal 172 of an adjacent additional module 160.

By arranging the additional modules 160 between the communication module 32 and the safety module 10, the data corresponding to the conditions in relation to the fluid can be acquired from external sensors, and the conditions of the fluid can be monitored. In the case that the types and the number of the external sensors are increased, the number of the additional modules 160 can be increased. Furthermore, in the case that the types and the number of the external actuators are increased as well, the number of the additional modules 160 can also be increased. By providing a required number of the additional modules 160, it is possible to precisely perform processing of the signals in relation to operation controls of the external actuators, or condition notifications issued by the external sensors.

### (Exemplary Modification 2)

In the case of there being an intruder in the surrounding vicinity of the valve modules 12, or in the vicinity of a device to which the fluid is supplied by the valve modules 12, there is a possibility that such an intruder may be placed in danger. Preferably, the intruder is detected by an external device. Detection of the intruder by the external device is notified to the control device 30 by the safety control communication. The safety control of the valve modules 12 corresponds, for example, to a control to notify the control device 30 of the detection of the intruder by the external device. The control device 30 may carry out the operation control or the safety control of the valve modules 12 as necessary.

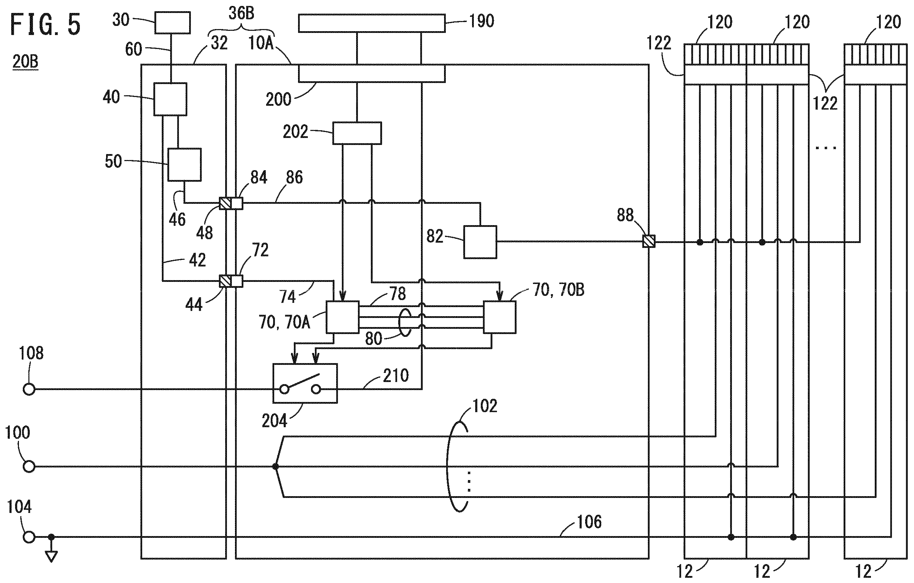

FIG. 5 is a diagram illustrating a valve system 20B including a safety module 10A and a plurality of valve modules 12 according to the Exemplary Modification 2. The safety module 10A and the communication module 32 are mutually connected together, and thereby constitute a module coupling body 36B. The valve system 20B further includes the control device 30, the communication module 32, and an external device 190.

The external device 190 generates a detection signal related to the safety control. The detection signal related to the safety control indicates, for example, detection of an intruder, or detection of an emergency stop instruction from the operator, or the like. The external device 190 is connected to the electrical power source 108 of the electrical power used in the controls. The external device 190 that generates the detection signal representing the detection of an intruder is a device having a sensor that detects the intruder, for example, such as a light curtain or the like. The external device 190 that generates the detection signal representing the detection of an emergency stop instruction from the operator, for example, is a button switch that the operator presses at the time of the emergency stop.

Part of the members of the safety module 10A shown in FIG. 5 is the same as that of the safety module 10 shown in FIG. 1. In FIG. 5, descriptions concerning constituent members denoted by the same reference numerals as those shown in FIG. 1 overlap with those features shown in FIG. 1, and therefore descriptions of such features are omitted herein. The safety module 10A includes the safety control processing circuit 70 (the first safety control processing circuit 70A and the second safety control processing circuit 70B), the connection terminal 72, the safety control wiring 74, the bidirectional communication line 78, the pair of unidirectional communication lines 80, the operation control processing circuit 82, the input terminal 84, the operation control wiring 86, and the output terminal 88. The safety module 10A further includes an external interface 200, a signal input circuit 202, and a second switching circuit 204.

The electrical power used in the controls which is supplied to the external device 190 is output from the external interface 200 to the external device 190. The detection signal related to the safety control which is generated by the external device 190 is input from the external device 190 to the external interface 200. The detection signal input from the external device 190 to the external interface 200 is input to the signal input circuit 202. The detection signal related to the safety control, which is input from the external device 190 to the external interface 200, is a signal represented by a voltage, for example. In that case, the signal input circuit 202, for example, is a voltage monitor. The signal input circuit 202 outputs the detection signal that has been input to the signal input circuit 202, to the safety control processing circuit 70.

The safety control processing circuit 70 issues a notification to the control device 30 by way of a safety control communication, to the effect that a detection signal related to the safety control has been input to the safety control processing circuit 70. Using a non-illustrated notification unit connected to the control device 30, the control device 30 issues a notification to the operator, to the effect that a detection signal related to the safety control has been generated by the external device 190. The notification unit is a speaker, a warning light, an indicator, or the like. By the operator operating a non-illustrated operation unit connected to the control device 30, via the operation control communication between the control device 30 and the operation control processing circuit 82, it is possible to safely cause the valve modules 12 to be stopped.

In the safety module 10A, it is also possible to check the normality of the external device 190. The second switching circuit 204 is placed on an electrical power line 210 connected to the electrical power source 108 of the electrical power used in the controls that is supplied to the external device 190. The second switching circuit 204 switches between a state of supplying the electrical power used for performing operations to the external device 190 and a state of not supplying the electrical power, in accordance with a power supply control signal that is output from the safety control processing circuit 70. The power supply control signal is a signal indicating whether or not to supply the electrical power used for controlling, to the external device 190. The safety control processing circuit 70 that outputs the power supply control signal may be either one or both of the first safety control processing circuit 70A and the second safety control processing circuit 70B.

In particular, in a case where the switching operation of the second switching circuit 204 is performed when the power supply control signal is output from both the first safety control processing circuit 70A and the second safety control processing circuit 70B, then safety is high. For example, the second switching circuit 204 becomes turned ON only in the case that the power supply control signal in order to turn ON the second switching circuit 204 is output from both the first safety control processing circuit 70A and the second safety control processing circuit 70B. Thereafter, even in the case that the first safety control processing circuit 70A has malfunctioned, the second safety control processing circuit 70B outputs the power supply control signal in order to turn OFF the second switching circuit 204, whereby the second switching circuit 204 can be turned OFF.

On the basis of the safety control communication, the safety control processing circuit 70 outputs the power supply control signal to the second switching circuit 204. By outputting the power supply control signal, the safety control processing circuit 70 turns ON or turns OFF the second switching circuit 204. FIG. 5 shows an example in which the second switching circuit 204 is turned OFF.

In accordance with the power supply control signal output from the safety control processing circuit 70, the second switching circuit 204 can momentarily interrupt the supply of electrical power to the external device 190. In that case, the external device 190 detects the momentary interruption of the supply of electrical power. The external device 190 generates the detection signal related to the safety control in response to the detected momentary interruption of the supply of electrical power.

The detection signal related to the safety control which is generated by the external device 190 is input from the external device 190 to the signal input circuit 202 via the external interface 200. The signal input circuit 202 outputs the detection signal related to the safety control that has been input to the signal input circuit 202, to the safety control processing circuit 70. The safety control processing circuit 70 generates information in relation to the normality of the external device 190, based on the detection signal input to the signal input circuit 202, and the power supply control signal output to the second switching circuit 204. By way of the safety control communication, the safety control processing circuit 70 notifies the control device 30 of the information in relation to the normality of the external device 190.

The information in relation to the normality of the external device 190 indicates whether the external device 190 operates normally or abnormally. Concerning the momentary interruption of the supply of electrical power to the external device 190, in the case that the content indicated by the power supply control signal and the content indicated by the detection signal coincide, the external device 190 is considered to operate normally. In the case that the content indicated by the power supply control signal and the content indicated by the detection signal do not coincide, the external device 190 is considered to operate abnormally. Moreover, whether or not the content indicated by the power supply control signal and the content indicated by the detection signal coincide may be detected by either one or both of the first safety control processing circuit 70A and the second safety control processing circuit 70B.

A voltage monitor may be arranged on the electrical power line 210 at a position between the second switching circuit 204 and the external interface 200. The voltage measured by the voltage monitor on the electrical power line 210 may be used to generate information in relation to the normality of the external device 190. In that case, the safety control processing circuit 70 generates the information in relation to the normality of the external device 190, based on the detection signal input to the signal input circuit 202, the power supply control signal output to the second switching circuit 204, and the voltage measured by the voltage monitor on the electrical power line 210. Whether or not the measured voltage, the content indicated by the power supply control signal, and the content indicated by the detection signal coincide may be detected by either one or both of the first safety control processing circuit 70A and the second safety control processing circuit 70B.

Concerning the momentary interruption of the supply of electrical power to the external device 190, in the case that the voltage measured by the voltage monitor on the electrical power line 210 and the voltage represented as the detection signal coincide, the external device 190 is considered to be normal. In the case that the voltage measured by the voltage monitor on the electrical power line 210 and the voltage represented as the detection signal do not coincide, the external device 190 is considered to be abnormal.

As the information in relation to the normality of the external device 190, in the case that a notification is issued of an abnormality in the external device 190, the control device 30 informs the operator of the abnormality of the external device 190. By the operator operating the control device 30, via the operation control communication between the control device 30 and the operation control processing circuit 82, it is possible to safely cause the valve modules 12 to be stopped. Moreover, it should be noted that, in the case that a notification is issued of an abnormality in the external device 190, the control device 30 may automatically and safely stop the valve modules 12 without any operations made by the operator.

In the safety module 10A according to the present exemplary modification, the detection signal related to the safety control is input from the external device 190 to the signal input circuit 202. The safety control processing circuit 70 notifies the control device 30 of the input of the detection signal, by way of a safety control communication.

In the case that the second switching circuit 204 has interrupted the supply of electrical power to the external device 190, the safety control processing circuit 70 generates information in relation to the normality of the external device 190. The information in relation to the normality of the external device 190 is generated on the basis of the detection signal input to the signal input circuit 202, and the power supply control signal output to the second switching circuit 204. By way of the safety control communication, the safety control processing circuit 70 notifies the control device 30 of the information in relation to the normality of the external device 190.

Moreover, it should be noted that, in the case that the external device 190 includes a function as an output signal switching device, a generation process by which information in relation to the normality of the external device 190 is generated by the safety control processing circuit 70 is not necessarily needed. Thus, such a generation process may be prohibited by the operator operating the control device 30.

### (Exemplary Modification 3)

The safety control of the valve modules 12 may be a control to interrupt the power used for performing operations, a control to cause the valve modules 12 to be safely stopped, and a control to issue, to the control device 30, a notification of the detection of an intruder. More specifically, the constituent members of the safety module 10 according to the above-described embodiment, and the constituent members of the safety module 10A according to the Exemplary Modification 2 may be combined.

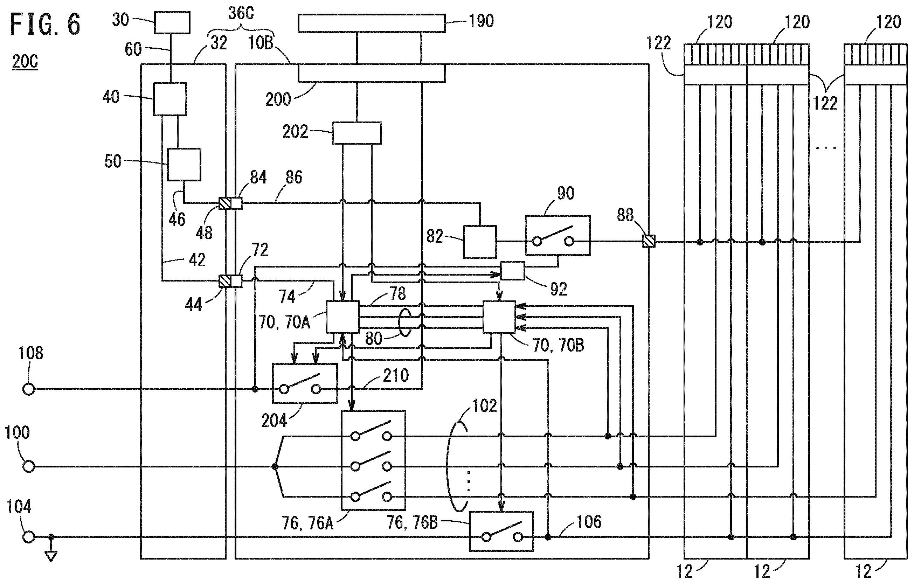

FIG. 6 is a diagram illustrating a valve system 20C including a safety module 10B and a plurality of valve modules 12 according to the Exemplary Modification 3. The safety module 10B and the communication module 32 are mutually connected together, and thereby constitute a module coupling body 36C. The valve system 20C further includes the control device 30, the communication module 32, and the external device 190.

Part of the members of the safety module 10B shown in FIG. 6 is the same as that of the safety module 10 shown in FIG. 1. The remaining members possessed by the safety module 10B shown in FIG. 6 are the same as in the safety module 10A shown in FIG. 5. Descriptions of the members shown in FIG. 6 are omitted, since these features have been described above using FIG. 1 or FIG. 5. The safety module 10B shown in FIG. 6 functions as the safety module 10 shown in FIG. 1, and together therewith, also functions as the safety module 10A shown in FIG. 5.

### (Exemplary Modification 4)

The safety module 10 in the embodiment described above, the safety module 10 in Exemplary Modification 1, the safety module 10A in Exemplary Modification 2, and the safety module 10B in Exemplary Modification 3 may be interchanged with each other.

For example, the safety module 10 connected to the communication module 32 of the module coupling body 36 according to the above-described embodiment can be replaced by the safety module 10A in Exemplary Modification 2. In accordance with this feature, the module coupling body 36B shown in FIG. 5 is obtained. The connection terminal 72 of the safety module 10A is connected to the first terminal 44 of the communication module 32. The input terminal 84 of the safety module 10A is connected to the second terminal 48 of the communication module 32. By the connection between the connection terminal 72 and the first terminal 44 and the connection between the input terminal 84 and the second terminal 48, the communication module 32 is coupled to the safety module 10A.

The safety module 10 connected to the communication module 32 of the module coupling body 36 according to the above-described embodiment can be replaced by the safety module 10B in Exemplary Modification 3. In accordance with this feature, the module coupling body 36C shown in FIG. 6 is obtained. The connection terminal 72 of the safety module 10B is connected to the first terminal 44 of the communication module 32. The input terminal 84 of the safety module 10B is connected to the second terminal 48 of the communication module 32. By the connection between the connection terminal 72 and the first terminal 44 and the connection between the input terminal 84 and the second terminal 48, the communication module 32 is coupled to the safety module 10B.

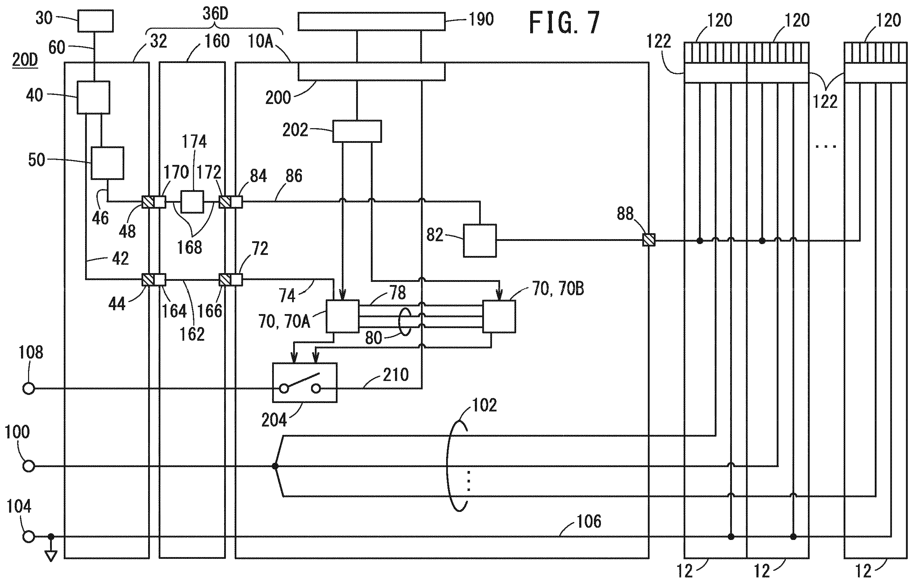

Further, the safety module 10 of the module coupling body 36A in Exemplary Modification 1 may be replaced by the safety module 10A in Exemplary Modification 2. FIG. 7 is a diagram for describing an example of an Exemplary Modification 4 in which a valve system 20D includes a safety module 10A according to the Exemplary Modification 2. A module coupling body 36D is constituted by the safety module 10A, the additional module 160, and the communication module 32.

The connection terminal 72 of the safety module 10A is connected to the fourth terminal 166 of the additional module 160. The input terminal 84 of the safety module 10A is connected to the sixth terminal 172 of the additional module 160. By the connection between the connection terminal 72 and the fourth terminal 166 and the connection between the input terminal 84 and the sixth terminal 172, the additional module 160 is coupled to the safety module 10A.

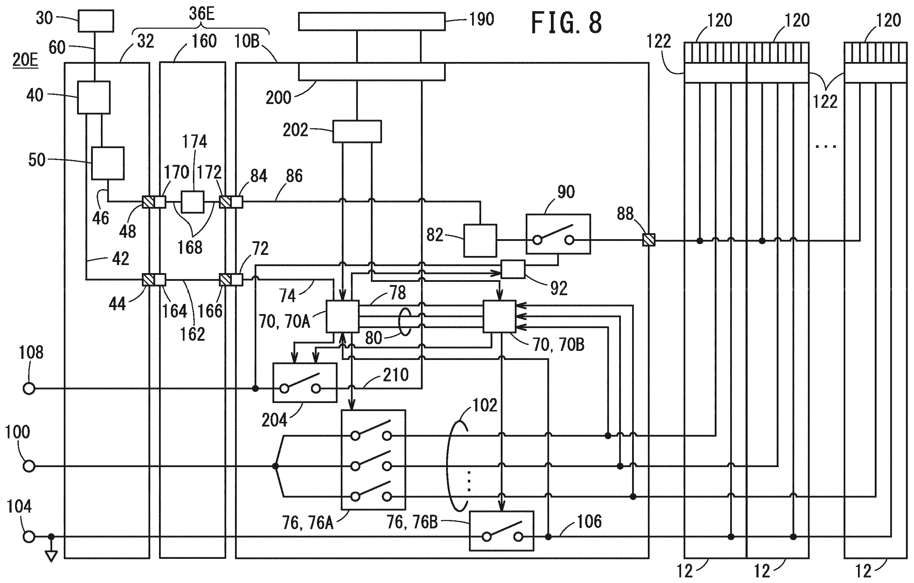

The safety module 10 of the module coupling body 36A in the Exemplary Modification 1 may be replaced by the safety module 10B in Exemplary Modification 3. FIG. 8 is a diagram for describing another example of the Exemplary Modification 4 in which a valve system 20E includes a safety module 10B according to the Exemplary Modification 3. A module coupling body 36E is constituted by the safety module 10B, the additional module 160, and the communication module 32.

The connection terminal 72 of the safety module 10B is connected to the fourth terminal 166 of the additional module 160. The input terminal 84 of the safety module 10B is connected to the sixth terminal 172 of the additional module 160. By the connection between the connection terminal 72 and the fourth terminal 166 and the connection between the input terminal 84 and the sixth terminal 172, the additional module 160 is coupled to the safety module 10B.

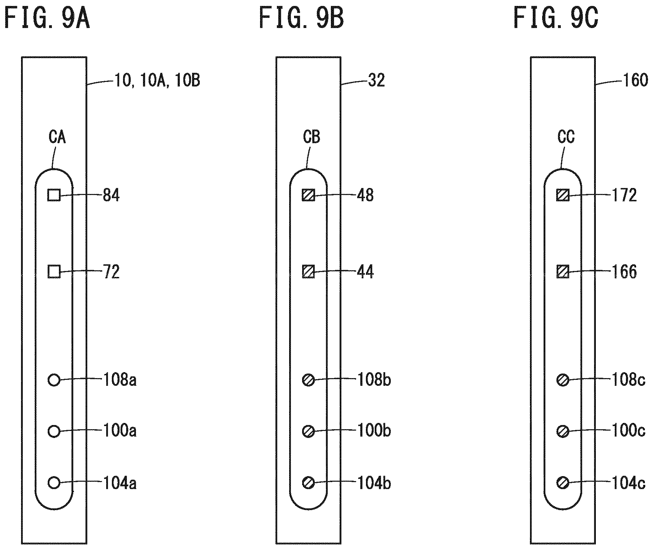

FIG. 9A is a diagram illustrating a connector that three types of the safety modules 10, 10A, and 10B each have and is common to the three types. A connector CA provided on each of the safety modules of the three types of the safety modules 10, 10A and 10B engages mutually with a connector provided on an adjacent module that lies adjacent to the safety module. The adjacent module includes the communication module 32 or the additional module 160, as have been described above. The present modification will be described using the safety module 10, however, the same applies to the case of the description in which the safety module 10A or 10B is used.

The connector CA includes the connection terminal 72, the input terminal 84, a power supply terminal 100a, a power supply terminal 104a, and a power supply terminal 108a. The power supply terminal 100a is electrically connected to the positive electrode 100 of the electrical power source of the electrical power used for performing operations, via an electrical power line or the like. The power supply terminal 104a is electrically connected to the negative electrode 104 of the electrical power source of the electrical power used for performing operations, via an electrical power line or the like. The power supply terminal 108a is electrically connected to the electrical power source 108 of the electrical power used in the controls, via an electrical power line or the like.

FIG. 9B is a diagram illustrating a connector CB of the communication module 32. In the case that the additional module 160 is not arranged between the communication module 32 and the safety module 10, the adjacent module that lies adjacent to the safety module 10 is the communication module 32. Accordingly, the connector CB provided on the communication module 32 engages mutually with the connector CA provided on the safety module 10. By the connector CA of the safety module 10 and the connector CB of the communication module 32 being in engagement, the safety module 10 and the communication module 32 are mutually connected together.

The connector CB includes the first terminal 44, the second terminal 48, a power supply terminal 100b, a power supply terminal 104b, and a power supply terminal 108b. The power supply terminal 100b is electrically connected to the positive electrode 100 of the electrical power source of the electrical power used for performing operations, via an electrical power line or the like. The power supply terminal 104b is electrically connected to the negative electrode 104 of the electrical power source of the electrical power used for performing operations, via an electrical power line or the like. The power supply terminal 108b is electrically connected to the electrical power source 108 of the electrical power used in the controls, via an electrical power line or the like.

The positions of the terminals in the connector CA of the safety module 10 correspond respectively to the positions of the terminals in the connector CB of the communication module 32. Accordingly, by the connector CA of the safety module 10 and the connector CB of the communication module 32 being engaged with each other, the corresponding terminals are connected to each other.

More specifically, the connection terminal 72 of the safety module 10 is connected to the first terminal 44 of the communication module 32. The input terminal 84 of the safety module 10 is connected to the second terminal 48 of the communication module 32. The power supply terminal 100a of the safety module 10 and the power supply terminal 100b of the communication module 32 are connected. The power supply terminal 104a of the safety module 10 and the power supply terminal 104b of the communication module 32 are connected. The power supply terminal 108a of the safety module 10 and the power supply terminal 108b of the communication module 32 are connected.

FIG. 9C is a diagram illustrating a connector CC of the additional module 160. In the case that the additional module 160 is arranged between the communication module 32 and the safety module 10, the adjacent module that lies adjacent to the safety module 10 is the additional module 160. Accordingly, the connector CC provided on the additional module 160 engages mutually with the connector CA provided on the safety module 10. By the connector CA of the safety module 10 and the connector CC of the additional module 160 being in engagement, the safety module 10 and the additional module 160 are mutually connected together.

The connector CC includes the fourth terminal 166, the sixth terminal 172, a power supply terminal 100c, a power supply terminal 104c, and a power supply terminal 108c. The power supply terminal 100c is electrically connected to the positive electrode 100 of the electrical power source of the electrical power used for performing operations, via an electrical power line or the like. The power supply terminal 104c is electrically connected to the negative electrode 104 of the electrical power source of the electrical power used for performing operations, via an electrical power line or the like. The power supply terminal 108c is electrically connected to the electrical power source 108 of the electrical power used in the controls, via an electrical power line or the like.

The positions of the terminals in the connector CA of the safety module 10 correspond respectively to the positions of the terminals in the connector CC of the additional module 160. Accordingly, by the connector CA of the safety module 10 and the connector CC of the additional module 160 being engaged with each other, the corresponding terminals are connected to each other.

More specifically, the connection terminal 72 of the safety module 10 is connected to the fourth terminal 166 of the additional module 160. The input terminal 84 of the safety module 10 is connected to the sixth terminal 172 of the additional module 160. The power supply terminal 100a of the safety module 10 and the power supply terminal 100c of the additional module 160 are connected. The power supply terminal 104a of the safety module 10 and the power supply terminal 104c of the additional module 160 are connected. The power supply terminal 108a of the safety module 10 and the power supply terminal 108c of the additional module 160 are connected.

As noted previously, the three types of the safety modules 10, 10A, and 10B each include the connector CA having the same structure as that shown in FIG. 9A. Accordingly, the safety module 10 is capable of being replaced by the safety module 10A, and the safety module 10 is capable of being replaced by the safety module 10B. The safety module 10A is capable of being replaced by the safety module 10A, and the safety module 10 is capable of being replaced by the safety module 10B. The safety module 10B is capable of being replaced by the safety module 10, and the safety module 10B is capable of being replaced by the safety module 10A.

By replacing the safety module, it is possible to provide the module coupling body which can be used in a variety of applications corresponding to the respective types of safety modules.

## Claims

1. A safety module (10, 10A, 10B) configured to communicate with a control device (30) configured to perform a control on a valve module (12), the safety module comprising:
a safety control processing circuit (70) configured to carry out a safety control communication in relation to a safety control of the valve module (12), with the control device (30), the safety control of the valve module (12) including control to interrupt an electrical power for operation supplied to the valve module (12);
a connection terminal (72) configured to be used in the safety control communication between the control device (30) and the safety control processing circuit (70);
a safety control wiring (74) configured to connect the safety control processing circuit (70) and the connection terminal (72), and to be used in the safety control communication;
an operation control processing circuit (82) that is provided separately from the safety control processing circuit (70) and configured to perform, with the control device (30), an operation control communication in relation to an operation control of the valve module (12) that differs from the safety control of the valve module (12) and corresponds to controlling a supply of fluid by operating the valve module (12), and to output an operation control signal for the valve module (12), based on the operation control communication;
an input terminal (84) to which the operation control communication between the control device (30) and the operation control processing circuit (82) is input, the input terminal (84) differing from the connection terminal (72);
an operation control wiring (86) configured to connect the operation control processing circuit (82) and the input terminal (84), and to be used in the operation control communication; and
an output terminal (88) configured to output the operation control signal that has been output from the operation control processing circuit (82), to the valve module (12).

2. The safety module (10, 10B) according to claim 1, further comprising:
a first switching circuit (76) configured to supply the electrical power for operation, to the valve module (12);
wherein the safety control processing circuit (70) outputs a safety control signal for the safety control, based on the safety control communication; and
the first switching circuit (76) switches between a state of supplying the electrical power for operation to the valve module (12), and a state of not supplying the electrical power for operation to the valve module (12), in accordance with the safety control signal that has been output from the safety control processing circuit (70).

3. The safety module (10, 10B) according to claim 2, wherein:
the first switching circuit (76) includes a high side switch (76A) connected to an electrical power source of the valve module (12), and a low side switch (76B) connected to ground;
in a case that the safety control signal is an ON signal, both the high side switch (76A) and the low side switch (76B) are turned ON, whereby the electrical power for operation is supplied to the valve module (12); and
in a case that the safety control signal is an OFF signal, at least one of the high side switch (76A) or the low side switch (76B) is turned off, whereby supply of the electrical power for operation to the valve module (12) is interrupted.

4. The safety module (10, 10B) according to claim 2 or 3, further comprising:
a signal output circuit (90) configured to switch between a state of outputting the operation control signal that has been output from the operation control processing circuit (82), to the valve module (12) via the output terminal (88) and a state of not outputting the operation control signal, in accordance with the safety control signal that has been output from the safety control processing circuit (70);
wherein, in a case that the safety control signal is an ON signal, the signal output circuit (90) outputs the operation control signal to the valve module (12), and in a case that the safety control signal is an OFF signal, the signal output circuit (90) does not output the operation control signal to the valve module (12).

5. The safety module (10A, 10B) according to any one of claims 1 to 4, further comprising:
a signal input circuit (202) to which a detection signal related to the safety control is input from an external device (190) configured to generate the detection signal; and
a second switching circuit (204) configured to switch between a state of supplying electrical power to the external device (190) and a state of not supplying the electrical power thereto, in accordance with a power supply control signal that is output from the safety control processing circuit (70) based on the safety control communication;
wherein, in a case that the second switching circuit (204) interrupts supply of the electrical power to the external device (190) in accordance with the power supply control signal, the safety control processing circuit (70) issues, to the control device (30), a notification of information in relation to normality of the external device (190), via the safety control communication, based on the power supply control signal and the detection signal input to the signal input circuit (202).

6. The safety module (10, 10B) according to claim 3, wherein:
the safety control processing circuit (70) includes a first safety control processing circuit (70A) configured to perform the safety control communication with the control device (30), and to turn ON or turn OFF the high side switch (76A), and a second safety control processing circuit (70B) configured to perform the safety control communication with the control device (30) via the first safety control processing circuit (70A), and to turn ON or turn OFF the low side switch (76B);
in a case that the safety control signal output by the first safety control processing circuit (70A) is the ON signal, the high side switch (76A) is turned ON;
in a case that the safety control signal output by the first safety control processing circuit (70A) is the OFF signal, the high side switch (76A) is turned OFF;
in a case that the safety control signal output by the second safety control processing circuit (70B) is the ON signal, the low side switch (76B) is turned ON; and
in a case that the safety control signal output by the second safety control processing circuit (70B) is the OFF signal, the low side switch (76B) is turned OFF.

7. The safety module (10, 10B) according to claim 6, further comprising:
a bidirectional communication line (78) and a pair of unidirectional communication lines (80) provided between the first safety control processing circuit (70A) and the second safety control processing circuit (70B) in order to enable communications between the first safety control processing circuit (70A) and the second safety control processing circuit (70B);
wherein each of the first safety control processing circuit (70A) and the second safety control processing circuit (70B) includes a safety layer protocol processing unit (146) configured to perform a safety layer protocol process in relation to safety of the communications in the pair of unidirectional communication lines (80).

8. A module coupling body (36, 36A-36E), comprising:
the safety module (10, 10A, 10B) according to any one of claims 1 to 7; and
a communication module (32) including a control communication processing circuit (40) configured to relay the safety control communication and the operation control communication, a first wiring (42) used in the safety control communication relayed by the control communication processing circuit (40), a first terminal (44) connected to the first wiring (42), a second wiring (46) used in the operation control communication relayed by the control communication processing circuit (40), and a second terminal (48) connected to the second wiring (46), wherein the communication module (32) is disposed between the control device (30) and the safety module (10, 10A, 10B) and connected with the safety module (10, 10A, 10B).

9. The module coupling body (36A, 36D, 36E) according to claim 8, further comprising at least one additional module (160) including a third wiring (162) used in the safety control communication, a third terminal (164) connected to one end of the third wiring (162), a fourth terminal (166) connected to another end of the third wiring (162), a fourth wiring (168) used in the operation control communication, a fifth terminal (170) connected to one end of the fourth wiring (168), a sixth terminal (172) connected to another end of the fourth wiring (168), and a function control processing circuit (174) disposed on the fourth wiring (168), and configured to process an operation control signal that causes the control device (30) to control an operation of an external actuator, or a condition notification signal that issues, to the control device (30), a notification of a condition detected by an external sensor, wherein the at least one additional module (160) is disposed between the communication module (32) and the safety module (10, 10A, 10B) and is connected with the communication module (32) and the safety module (10, 10A, 10B).

10. The module coupling body (36, 36B, 36C) according to claim 8, wherein:
the communication module (32) is connected to the safety module (10, 10A, 10B), by the connection terminal (72) of the safety module (10, 10A, 10B) and the first terminal (44) of the communication module (32) being connected, and in addition, by the input terminal (84) of the safety module (10, 10A, 10B) and the second terminal (48) of the communication module (32) being connected; and
the safety module (10, 10A, 10B) is replaceable.

11. The module coupling body (36A, 36D, 36E) according to claim 9, wherein:
the additional module (160) is connected to the safety module (10, 10A, 10B), by the connection terminal (72) of the safety module (10, 10A, 10B) and the fourth terminal (166) of an additional module (160) adjacent to the safety module (10, 10A, 10B) from among the at least one additional module (160) being connected, and in addition, by the input terminal (84) of the safety module (10, 10A, 10B) and the sixth terminal of the additional module (160) adjacent to the safety module (10, 10A, 10B) being connected; and
the safety module (10, 10A, 10B) is replaceable.

## Patentansprüche

1. Sicherheitsmodul (10, 10A, 10B), das zur Kommunikation mit einer Steuervorrichtung (30) konfiguriert ist, die zur Steuerung eines Ventilmoduls (12) konfiguriert ist, wobei das Sicherheitsmodul umfasst:
eine Sicherheitssteuerungsverarbeitungsschaltung (70), die so konfiguriert ist, dass sie eine Sicherheitssteuerungskommunikation in Bezug auf eine Sicherheitssteuerung des Ventilmoduls (12) mit der Steuervorrichtung (30) durchführt, wobei die Sicherheitssteuerung des Ventilmoduls (12) eine Steuerung zum Unterbrechen einer dem Ventilmodul (12) zugeführten Betriebsstromversorgung umfasst;
einen Anschluss (72), der für die Verwendung in der Sicherheitssteuerungskommunikation zwischen der Steuervorrichtung (30) und der Sicherheitssteuerungsverarbeitungsschaltung (70) konfiguriert ist;
eine Sicherheitssteuerungsverdrahtung (74), die für die Verbindung der Sicherheitssteuerungsverarbeitungsschaltung (70) mit dem Anschluss (72) konfiguriert ist und für die Verwendung in der Sicherheitssteuerungskommunikation vorgesehen ist;
eine Betriebssteuerungsschaltung (82), die getrennt von der Sicherheitssteuerungsschaltung (70) vorgesehen ist und so konfiguriert ist, dass sie mit der Steuervorrichtung (30) eine Betriebssteuerungskommunikation in Bezug auf eine Betriebssteuerung des Ventilmoduls (12) durchführt, die sich von der Sicherheitssteuerung des Ventilmoduls (12) unterscheidet und der Steuerung einer Fluidzufuhr durch Betätigen des Ventilmoduls (12) entspricht, und um auf der Grundlage der Betriebssteuerungskommunikation ein Betriebssteuersignal für das Ventilmodul (12) auszugeben;
einen Eingangsanschluss (84), an den die Betriebssteuerungskommunikation zwischen der Steuervorrichtung (30) und der Betriebssteuerungsverarbeitungsschaltung (82) eingegeben wird, wobei sich der Eingangsanschluss (84) vom Anschlussanschluss (72) unterscheidet;
eine Betriebssteuerungsverdrahtung (86), die so konfiguriert ist, dass sie die Betriebssteuerungsverarbeitungsschaltung (82) und den Eingangsanschluss (84) verbindet und für die Betriebssteuerungskommunikation verwendet wird; und
einen Ausgangsanschluss (88), der so konfiguriert ist, dass er das von der Betriebssteuerungsverarbeitungsschaltung (82) ausgegebene Betriebssteuersignal an das Ventilmodul (12) ausgibt.

2. Sicherheitsmodul (10, 10B) gemäß Anspruch 1, das ferner umfasst:
eine erste Schaltvorrichtung (76), die so konfiguriert ist, dass sie die elektrische Energie für den Betrieb an das Ventilmodul (12) liefert;
wobei die Sicherheitssteuerungsschaltung (70) ein Sicherheitssteuersignal für die Sicherheitssteuerung auf der Grundlage der Sicherheitssteuerungskommunikation ausgibt; und
die erste Schaltvorrichtung (76) zwischen einem Zustand, in dem sie die elektrische Energie für den Betrieb an das Ventilmodul (12) liefert, und einem Zustand, in dem sie die elektrische Energie für den Betrieb nicht an das Ventilmodul (12) liefert, entsprechend dem Sicherheitssteuerungssignal umschaltet, das von der Sicherheitssteuerungsverarbeitungsschaltung (70) ausgegeben wurde.

3. Sicherheitsmodul (10, 10B) gemäß Anspruch 2, wobei:
die erste Schaltvorrichtung (76) einen mit einer Stromquelle des Ventilmoduls (12) verbundenen High-Side-Schalter (76A) und einen mit Masse verbundenen Low-Side-Schalter (76B) umfasst;
in einem Fall, in dem das Sicherheitssteuersignal ein EIN-Signal ist, sowohl der High-Side-Schalter (76A) als auch der Low-Side-Schalter (76B) eingeschaltet werden, wodurch die elektrische Energie für den Betrieb an das Ventilmodul (12) geliefert wird; und
in einem Fall, in dem das Sicherheitssteuersignal ein AUS-Signal ist, mindestens einer der High-Side-Schalter (76A) oder der Low-Side-Schalter (76B) ausgeschaltet wird, wodurch die Zufuhr der elektrischen Energie für den Betrieb zum Ventilmodul (12) unterbrochen wird.

4. Sicherheitsmodul (10, 10B) gemäß Anspruch 2 oder 3, das ferner umfasst:
eine Signalausgabeschaltung (90), die so konfiguriert ist, dass sie zwischen einem Zustand, in dem das von der Betriebssteuerungsschaltung (82) ausgegebene Betriebssteuersignal über den Ausgangsanschluss (88) an das Ventilmodul (12) ausgegeben wird, und einem Zustand, in dem das Betriebssteuersignal nicht ausgegeben wird, entsprechend dem von der Sicherheitssteuerungsschaltung (70) ausgegebenen Sicherheitssteuersignal umschaltet;
wobei in einem Fall, in dem das Sicherheitssteuersignal ein EIN-Signal ist, die Signalausgabeschaltung (90) das Betriebssteuersignal an das Ventilmodul (12) ausgibt, und in einem Fall, in dem das Sicherheitssteuersignal ein AUS-Signal ist, die Signalausgabeschaltung (90) das Betriebssteuersignal nicht an das Ventilmodul (12) ausgibt.

5. Sicherheitsmodul (10A, 10B) gemäß einem der Ansprüche 1 bis 4, ferner umfassend:
eine Signaleingangsschaltung (202), in die ein mit der Sicherheitssteuerung verbundenes Erkennungssignal von einer externen Vorrichtung (190) eingegeben wird, die so konfiguriert ist, dass sie das Erkennungssignal erzeugt; und
eine zweite Schaltvorrichtung (204), die so konfiguriert ist, dass sie zwischen einem Zustand, in dem die externe Vorrichtung (190) mit Strom versorgt wird, und einem Zustand, in dem sie nicht mit Strom versorgt wird, entsprechend einem Stromversorgungssteuersignal umschaltet, das von der Sicherheitssteuerungsverarbeitungsschaltung (70) auf der Grundlage der Sicherheitssteuerungskommunikation ausgegeben wird;
wobei in einem Fall, in dem die zweite Schaltvorrichtung (204) die Zufuhr von elektrischer Energie zu der externen Vorrichtung (190) gemäß dem Stromversorgungssteuersignal unterbricht, die Sicherheitssteuerungsverarbeitungsschaltung (70) an die Steuervorrichtung (30) eine Benachrichtigung über Informationen in Bezug auf die Normalität der externen Vorrichtung (190) ausgibt, über die Sicherheitssteuerungskommunikation auf der Grundlage des Stromversorgungssteuersignals und des in die Signaleingangsschaltung (202) eingegebenen Erfassungssignals.

6. Sicherheitsmodul (10, 10B) gemäß Anspruch 3, wobei:
die Sicherheitssteuerungsschaltung (70) eine erste Sicherheitssteuerungsschaltung (70A) umfasst, die so konfiguriert ist, dass sie die Sicherheitssteuerungskommunikation mit der Steuervorrichtung (30) durchführt und zum Ein- oder Ausschalten des High-Side-Schalters (76A), und eine zweite Sicherheitssteuerungsschaltung (70B) umfasst, die so konfiguriert ist, dass sie die Sicherheitssteuerungskommunikation mit der Steuervorrichtung (30) über die erste Sicherheitssteuerungsschaltung (70A) durchführt und den Low-Side-Schalter (76B) ein- oder ausschaltet;
in einem Fall, in dem das von der ersten Sicherheitssteuerungsverarbeitungsschaltung (70A) ausgegebene Sicherheitssteuersignal das EIN-Signal ist, wird der High-Side-Schalter (76A) eingeschaltet;
in einem Fall, in dem das von der ersten Sicherheitssteuerungsverarbeitungsschaltung (70A) ausgegebene Sicherheitssteuersignal das AUS-Signal ist, wird der High-Side-Schalter (76A) ausgeschaltet;
wenn das von der zweiten Sicherheitssteuerungsschaltung (70B) ausgegebene Sicherheitssteuersignal das EIN-Signal ist, wird der Low-Side-Schalter (76B) eingeschaltet; und
wenn das von der zweiten Sicherheitssteuerungsschaltung (70B) ausgegebene Sicherheitssteuersignal das AUS-Signal ist, wird der Low-Side-Schalter (76B) ausgeschaltet.

7. Sicherheitsmodul (10, 10B) gemäß Anspruch 6, das ferner umfasst:
eine bidirektionale Kommunikationsleitung (78) und ein Paar unidirektionaler Kommunikationsleitungen (80), die zwischen der ersten Sicherheitssteuerungsschaltung (70A) und der zweiten Sicherheitssteuerungsschaltung (70B) vorgesehen sind, um eine Kommunikation zwischen der ersten Sicherheitssteuerungsschaltung (70A) und der zweiten Sicherheitssteuerungsschaltung (70B) zu ermöglichen;
wobei sowohl die erste Sicherheitssteuerungsverarbeitungsschaltung (70A) als auch die zweite Sicherheitssteuerungsverarbeitungsschaltung (70B) eine Sicherheitsschicht-Protokollverarbeitungseinheit (146) umfassen, die so konfiguriert ist, dass sie einen Sicherheitsschicht-Protokollprozess in Bezug auf die Sicherheit der Kommunikation in dem Paar unidirektionaler Kommunikationsleitungen (80) durchführt.

8. Modulkopplungskörper (36, 36A-36E), umfassend:
das Sicherheitsmodul (10, 10A, 10B) gemäß einem der Ansprüche 1 bis 7;
und
ein Kommunikationsmodul (32) mit einer Steuerkommunikationsverarbeitungsschaltung (40), die so konfiguriert ist, dass sie die Sicherheitskontrollkommunikation und die Betriebssteuerungskommunikation weiterleitet, einer ersten Verdrahtung (42), die in der von der Steuerkommunikationsverarbeitungsschaltung (40) weitergeleiteten Sicherheitskontrollkommunikation verwendet wird, einem ersten Anschluss (44), der mit der ersten Verdrahtung (42) verbunden ist, eine zweite Verdrahtung (46), die in der von der Steuerkommunikationsverarbeitungsschaltung (40) weitergeleiteten Betriebssteuerkommunikation verwendet wird, und einen zweiten Anschluss (48), der mit der zweiten Verdrahtung (46) verbunden ist, wobei das Kommunikationsmodul (32) zwischen der Steuervorrichtung (30) und dem Sicherheitsmodul (10, 10A, 10B) angeordnet und mit dem Sicherheitsmodul (10, 10A, 10B) verbunden ist.

9. Modulkopplungskörper (36A, 36D, 36E) gemäß Anspruch 8, der ferner mindestens ein zusätzliches Modul (160) umfasst, das eine dritte Verdrahtung (162) umfasst, die in der Sicherheitssteuerungskommunikation verwendet wird, einen dritten Anschluss (164), der mit einem Ende der dritten Verdrahtung (162) verbunden ist, einen vierten Anschluss (166), der mit einem anderen Ende der dritten Verdrahtung (162) verbunden ist, eine vierte Verdrahtung (168), die in der Betriebssteuerungskommunikation verwendet wird, einen fünften Anschluss (170), der mit einem Ende der vierten Verdrahtung (168) verbunden ist, einen sechsten Anschluss (172), der mit einem anderen Ende der vierten Verdrahtung (168) verbunden ist, und eine Funktionssteuerungsverarbeitungsschaltung (174), die auf der vierten Verdrahtung (168) angeordnet ist und so konfiguriert ist, dass sie ein Betriebssteuerungssignal verarbeitet, das die Steuervorrichtung (30) veranlasst, einen Betrieb eines externen Aktuators zu steuern, oder ein Zustandsmeldesignal, das eine Meldung eines von einem externen Sensor erfassten Zustands an die Steuervorrichtung (30) ausgibt, wobei das mindestens eine zusätzliche Modul (160) zwischen dem Kommunikationsmodul (32) und dem Sicherheitsmodul (10, 10A, 10B) angeordnet und mit dem Kommunikationsmodul (32) und dem Sicherheitsmodul (10, 10A, 10B) verbunden ist.

10. Modulkopplungskörper (36, 36B, 36C) gemäß Anspruch 8, wobei:
das Kommunikationsmodul (32) mit dem Sicherheitsmodul (10, 10A, 10B) über den Anschluss (72) des Sicherheitsmoduls (10, 10A, 10B) und den ersten Anschluss (44) des Kommunikationsmoduls (32) verbunden ist und zusätzlich durch den Eingangsanschluss (84) des Sicherheitsmoduls (10, 10A, 10B) und den zweiten Anschluss (48) des Kommunikationsmoduls (32) verbunden ist; und
das Sicherheitsmodul (10, 10A, 10B) austauschbar ist.

11. Modulkopplungskörper (36A, 36D, 36E) gemäß Anspruch 9, wobei:
das zusätzliche Modul (160) mit dem Sicherheitsmodul (10, 10A, 10B) verbunden ist, indem der Anschluss (72) des Sicherheitsmoduls (10, 10A, 10B) und der vierte Anschluss (166) eines zusätzlichen Moduls (160) neben dem Sicherheitsmodul (10, 10A, 10B) aus der Gruppe der mindestens einen zusätzlichen Module (160), die verbunden sind, und zusätzlich durch den Eingangsanschluss (84) des Sicherheitsmoduls (10, 10A, 10B) und den sechsten Anschluss des zusätzlichen Moduls (160) benachbart zum Sicherheitsmodul (10, 10A, 10B) verbunden ist; und
das Sicherheitsmodul (10, 10A, 10B) austauschbar ist.

## Revendications

1. Module de sécurité (10, 10A, 10B) configuré pour communiquer avec un dispositif de commande (30) configuré pour exécuter une commande sur un module de soupape (12), le module de sécurité comprenant :
un circuit de traitement de commande de sécurité (70) configuré pour établir une communication de commande de sécurité en rapport avec une commande de sécurité du module de soupape (12), avec le dispositif de commande (30), la commande de sécurité du module de soupape (12) incluant une commande destinée à interrompre une puissance électrique de fonctionnement fournie au module de soupape (12) ;
une borne de connexion (72) configurée pour être utilisée dans la communication de commande de sécurité entre le dispositif de commande (30) et le circuit de traitement de commande de sécurité (70) ;
un câble de commande de sécurité (74) configuré pour connecter le circuit de traitement de commande de sécurité (70) et la borne de connexion (72), et pour être utilisé dans la communication de commande de sécurité ;
un circuit de traitement de commande de fonctionnement (82), lequel est fourni séparément du circuit de traitement de commande de sécurité (70) et configuré pour établir, avec le dispositif de commande (30), une communication de commande de fonctionnement en rapport avec une commande de fonctionnement du module de soupape (12), laquelle est différente de la commande de sécurité du module de soupape (12) et correspond à la commande d'une alimentation en fluide par actionnement du module de soupape (12), et pour émettre un signal de commande de fonctionnement pour le module de soupape (12), sur la base de la communication de commande de fonctionnement ;
une borne d'entrée (84) à laquelle la communication de commande de fonctionnement entre le dispositif de commande (30) et le circuit de traitement de commande de fonctionnement (82) est appliquée, la borne d'entrée (84) étant différente de la borne de connexion (72) ;
un câble de commande de fonctionnement (86) configuré pour connecter le circuit de traitement de commande de fonctionnement (82) et la borne d'entrée (84), et pour être utilisé dans la communication de commande de fonctionnement ; et
une borne de sortie (88) configurée pour fournir le signal de commande de fonctionnement émis à partir du circuit de traitement de commande de fonctionnement (82), au module de soupape (12).

2. module de sécurité (10, 10B) selon la revendication 1, comprenant en outre :
un premier circuit de commutation (76) configuré pour alimenter la puissance électrique destinée au fonctionnement, au module de soupape (12) ;
dans lequel le circuit de traitement de commande de sécurité (70) fournit un signal de commande de sécurité pour la commande de sécurité, sur la base de la communication de commande de sécurité ; et
le premier circuit de commutation (76) commute entre un état d'alimentation de la puissance électrique destinée au fonctionnement au module de soupape (12), et un état de non alimentation de la puissance électrique destinée au fonctionnement au module de soupape (12), en fonction du signal de commande de sécurité émis à partir du circuit de traitement de commande de sécurité (70).

3. Module de sécurité (10, 10B) selon la revendication 2, dans lequel :
le premier circuit de commutation (76) inclut un commutateur côté haut (76A) connecté à une source de puissance électrique du module de soupape (12), et un commutateur côté bas (76B) connecté à la masse ;
dans un cas où le signal de commande de sécurité est un signal de marche, à la fois le commutateur côté haut (76A) et le commutateur côté bas (76B) sont activés, moyennant quoi la puissance électrique destinée au fonctionnement est fournie au module de soupape (12) ;
et
dans un cas où le signal de commande de sécurité est un signal d'arrêt, l'un au moins parmi le commutateur côté haut (76A) et le commutateur côté bas (76B) est désactivé, moyennant quoi l'alimentation du module de soupape (12) en puissance électrique destinée au fonctionnement est interrompue.

4. Module de sécurité (10, 10B) selon la revendication 2 ou 3, comprenant en outre :
un circuit de sortie de signal (90) configuré pour commuter entre un état d'émission du signal de commande de fonctionnement fourni à partir du circuit de traitement de commande de fonctionnement (82), au module de soupape (12) via la borne de sortie (88), et un état de non émission du signal de commande de sécurité, en fonction du signal de commande de sécurité émis à partir du circuit de traitement de commande de sécurité (70) ;
dans lequel, dans un cas où le signal de commande de sécurité est un signal de marche, le circuit de sortie de signal (90) fournit le signal de commande de fonctionnement au module de soupape (12), et dans un cas où le signal de commande de sécurité est un signal d'arrêt, le circuit de sortie de signal (90) ne fournit pas le signal de commande de fonctionnement au module de soupape (12).

5. Module de sécurité (10A, 10B) selon l'une quelconque des revendications 1 à 4, comprenant en outre :
un circuit d'entrée de signal (202) auquel un signal de détection associé à la commande de sécurité est appliqué à partir d'un dispositif externe (190) configuré pour générer le signal de détection ; et
un deuxième circuit de commutation (204) configuré pour commuter entre un état d'alimentation du dispositif externe (190) en puissance électrique et un état de non alimentation de celui-ci en puissance électrique, en fonction d'un signal de commande d'alimentation en puissance, lequel est émis à partir du circuit de traitement de commande de sécurité (70) sur la base de la communication de commande de sécurité ;
dans lequel, dans un cas où le deuxième circuit de commutation (204) interrompt l'alimentation du dispositif externe (190) en puissance électrique en fonction du signal de commande d'alimentation en puissance, le circuit de traitement de commande de sécurité (70) fournit, au dispositif de commande (30), une notification d'information en rapport avec la normalité du dispositif externe (190), via la communication de commande de sécurité, sur la base du signal de commande d'alimentation en puissance et du signal de détection, au circuit d'entrée de signal (202) .

6. Module de sécurité (10, 10B) selon la revendication 3, dans lequel :
le circuit de traitement de commande de sécurité (70) inclut un premier circuit de traitement de commande de sécurité (70A) configuré pour établir la communication de commande de sécurité avec le dispositif de commande (30), et pour activer ou désactiver le commutateur côté haut (76A), et un deuxième circuit de traitement de commande de sécurité (70B) configuré pour établir la communication de commande de sécurité avec le dispositif de commande (30) via le premier circuit de traitement de commande de sécurité (70A), et pour activer ou désactiver le commutateur côté bas (76B) ;
dans un cas où le signal de commande de sécurité émis par le premier circuit de traitement de commande de sécurité (70A) est un signal de marche, le commutateur côté haut (76A) est activé ;
dans un cas où le signal de commande de sécurité émis par le premier circuit de traitement de commande de sécurité (70A) est le signal d'arrêt, le commutateur côté haut (76A) est désactivé ;
dans un cas où le signal de commande de sécurité émis par le deuxième circuit de traitement de commande de sécurité (70B) est le signal de marche, le commutateur côté bas (76B) est activé ; et
dans un cas où le signal de commande de sécurité émis par le deuxième circuit de traitement de commande de sécurité (70B) est le signal d'arrêt, le commutateur côté bas (76B) est désactivé.

7. Module de sécurité (10, 10B) selon la revendication 6, comprenant en outre :
un ligne de communication bidirectionnelle (78) et une paire de lignes de communication unidirectionnelles (80) disposées entre le premier circuit de traitement de commande de sécurité (70A) et le deuxième circuit de traitement de commande de sécurité (70B) afin de permettre des communications entre le premier circuit de traitement de commande de sécurité (70A) et le deuxième circuit de traitement de commande de sécurité (70B) ;
dans lequel chacun parmi le premier circuit de traitement de commande de sécurité (70A) et le deuxième circuit de traitement de commande de sécurité (70B) inclut une unité de traitement de protocole de couche de sécurité (146) configurée pour exécuter un processus de protocole de couche de sécurité en rapport avec la sécurité de la communication dans la paire de lignes de communication unidirectionnelles (80).

8. Corps de couplage de module (36, 36A-36E), comprenant :
le module de sécurité (10, 10A, 10B) selon l'une quelconque des revendications 1 à 7 ; et
un module de communication (32) incluant un circuit de traitement de communication de commande (40) configuré pour relayer la communication de commande de sécurité et la communication de commande de fonctionnement, un premier câble (42) utilisé dans la communication de commande de sécurité relayée par le circuit de traitement de communication de commande (40), une première borne (44) connectée au premier câble (42), un deuxième câble (46) utilisé dans la communication de commande de fonctionnement relayée par le circuit de traitement de communication de commande (40), et une deuxième borne (48) connectée au deuxième câble (46), dans lequel le module de communication (32) est disposé entre le dispositif de commande (30) et le module de sécurité (10, 10A, 10B) et connecté au module de sécurité (10, 10A, 10B).

9. Corps de couplage de module (36A, 36D, 36E) selon la revendication 8, comprenant en outre au moins un module supplémentaire (160) incluant un troisième câble (162) utilisé dans la communication de commande de sécurité, une troisième borne (164) connectée à une extrémité du troisième câble (162), une quatrième borne (166) connectée à une autre extrémité du troisième câble (162), un quatrième câble (168) utilisé dans la communication de commande de fonctionnement, une cinquième borne (170) connectée à une extrémité du quatrième câble (168), une sixième borne (172) connectée à une autre extrémité du quatrième câble (168), et un circuit de traitement de commande de fonction (174) disposé sur le quatrième câble (168) et configuré pour traiter un signal de commande de fonctionnement amenant le dispositif de commande (30) à commander un fonctionnement d'un actionneur externe, ou un signal de notification de condition, lequel délivre, au dispositif de commande (30), une notification d'une condition détectée par un capteur externe, dans lequel l'au moins un module supplémentaire (160) est disposé entre le module de communication (32) et le module de sécurité (10, 10A, 10B) et connecté au module de communication (32) et au module de sécurité (10, 10A, 10B).

10. Corps de couplage de module (36, 36B, 36C) selon la revendication 8, dans lequel :
le module de communication (32) est connecté au module de sécurité (10, 10A, 10B), par la borne de connexion (72) du module de sécurité (10, 10A, 10B) et la première borne (44) du module de communication (32) connectée, et de plus, par la borne d'entrée (84) du module de sécurité (10, 10A, 10B) et la deuxième borne (48) du module de communication (32) connectée ; et
le module de sécurité (10, 10A, 10B) est remplaçable.

11. Corps de couplage de module (36A, 36D, 36E) selon la revendication 9, dans lequel :
le module supplémentaire (160) est connecté au module de sécurité (10, 10A, 10B), par la borne de connexion (72) du module de sécurité (10, 10A, 10B) et la quatrième borne (166) d'un module supplémentaire (160) adjacent au module de sécurité (10, 10A, 10B) parmi l'au moins un module supplémentaire (160) connecté, et de plus, par la borne d'entrée (84) du module de sécurité (10, 10A, 10B) et la sixième borne du module supplémentaire (160) adjacent au module de sécurité (10, 10A, 10B) connectée ; et
le module de sécurité (10, 10A, 10B) est remplaçable.
